# EUROPEAN PATENT APPLICATION

(11) **EP 1 524 825 A1**
(43) Date of publication of application: **20.04.2005**
(21) Application number: 03292588.5
(22) Date of filing: 17.10.2003
(51) Int. Cl.: H04M 1/247, H04M 1/2745

(54) **Method for selecting a service using a telecommunication terminal**

(71) Applicant: ALCATEL, 75008 Paris (FR)
(72) Inventor: Leroy, Jean François, 29850 Gouesnou (FR)
(74) Representative: Rausch, Gabriele, Dr.

(57) **Abstract**

The present invention concerns a method for selecting, in view of its activation or configuration, a service on a telecommunication terminal comprising a display and a keyboard, wherein a first set of keys of said keyboard are softkeys whose respective functions are indicated on the display, and a second set of keys allow to type letters, characterised in that the available services are addressable in a list of services by entering at least one letter representative of the designation of the requested service among said available services and by indicating that said at least one letter which has been entered is representative of or affected to an available service.

## Description

The present invention concerns the field of telecommunications, more particularly the services which might be provided and presented to users when using a telecommunication terminal with display and keyboard, especially one connected to a private branch exchange (PABX or PBX) within a telecommunication system.

The present invention is more specifically concerned with the problem of easy and confortable access to such services for the user, either to activate or to configure one of these services.

Nowadays the selection and configuration of services on a telecommunication terminal, such as for example voice related services (switch services, dial services,....), are generally proposed according to the two following ways:
- by using mean features on the set, or,
- by dialling the prefix number associated to the requested service (which prefix must be known by the user).

The present invention proposes a easier, quicker and more intuitive solution to perform the afore mentioned tasks.

Therefore, the present invention first concerns a method for selecting, in view of its activation or configuration, a service on a telecommunication terminal comprising a display and a keyboard, wherein a first set of keys of said keyboard are softkeys whose respective functions are indicated on the display, and a second set of keys allow to type letters, method characterised in that the available services are addressable in a list of services by entering at least one letter representative of the designation of the requested service among said available services and by indicating that said at least one letter which has been entered is representative of or affected to an available service.

The considered services are preferably, but not necessarily, telecommunication services. They can also encompass services like remote control, surveillance, launching an application on a PC, ...

According to a preferred embodiment of the invention, the method may consist more precisely in entering at least one letter affected to or related to the requested service, displaying the name of the service or of the name of the first service of a group of several services corresponding to the at least one letter which has been entered and simultaneously affecting two softkeys to scrolling functions in opposite directions in the list of available services, one softkey to a cancelling function, one softkey to a service configuration function and one softkey or key for service activation, and then cancelling the request, displaying the name of the preceding or following service in the list, entering a configuration mode or activating the displayed service in accordance with the softkey pressed by the user.

When said telecommunication terminal comprises or has access to a phone book directory able to perform phone number searches based on names, surnames, initials or abbreviations, said terminal provides a softkey allowing when pressed to indicate that the at least one entered letter is representative of a requested service. Then said method consists in pressing said service indication softkey after entering said at least one letter, in order to display the designation of the service or the first service corresponding to said at least one letter.

Advantageously, the at least one letter entered to select a service correspond(s) to the first letter(s) of the or one of the common designation(s) of said requested service or group of services, possibly in at least two languages, i.e. the local language of the user and English.

The access to the desired function or service can be obtained by using an internal or external search engine and from various entry requests.

Thus, as indicated herein before the main advantageous features proposed by the invention are to extend the switch directory accessible through the terminal, usually connected to a PABX, to the phone book directory and the services directory and to use the keyboard of the terminal to access to service configuration, whereby providing a basic solution on a physical set.

The present invention will now be described by way of example of non limitative embodiments of the invention, based on the enclosed figures wherein:
Figure 1 is a schematical drawing of a telecommunication system for carrying out the method according to the invention ;
Figures 2 and 3 are partial views of the display and the keyboard of a terminal as shown on figure 1, showing two different screens displayed consecutively on the terminal, and,
Figure 4 is a schematical drawing of an alternative embodiment of a telecommunication system for carrying out the method according to the invention.

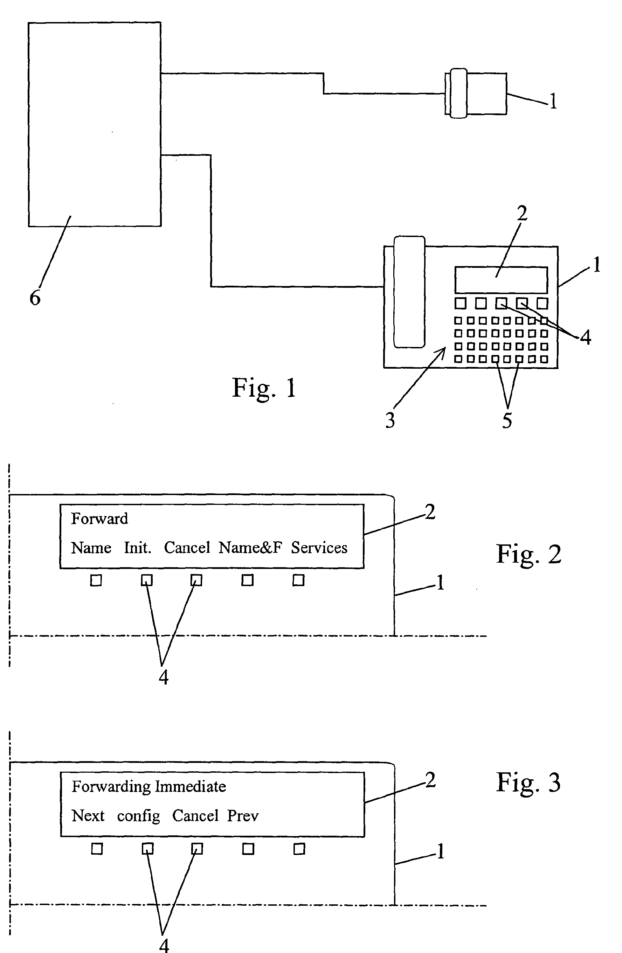

As can be noticed from figures 2 and 3 of the drawings, the method according to the invention provides that the available services are addressable in a list of services by entering at least one letter representative of the designation (in one or several languages) of the requested service among said available services and by indicating that said at least one letter which has been entered is representative of or affected to an available service.

As can be seen, a first configuration mode is set, wherein a first screen is present on the display 2 which allows to type and to show on said display 2 the at least one letter representative of a requested service entered with the second set of keys 5 and to instruct with allocated softkeys 4 to initiate a phone number search or to initiate a service search and then, when the service search softkey has been pressed, a second configuration mode is set, wherein a second screen is present on the display 2 which shows the name of the service or the name of the first service of a group of several services corresponding to the at least one entered letter and which allows to either display the designation of the preceding or the following name in relation with the displayed service name, cancel the service selection mode and return to the first configuration mode or enter a service configuration mode when corresponding authorisation is granted to the user, by pressing corresponding reallocated softkeys 4.

Preferably, the phone number search process and the service search process are based on the same search mechanisms and programs.

For example, these search features can be similar to the ones used in the UA set (type 4020 or 4035) of ALCATEL, to perform the "Call by name" function.

The present invention also concerns a telecommunication terminal comprising a display and a keyboard, wherein a first set of keys of said keyboard are softkeys whose respective functions are indicated on the display, and a second set of keys allows to type letters, said second set being preferably alphanumeric. Said terminal is characterised in that said keyboard 3 and display 2 are adapted to select and possibly activate or configure a service, the available services being addresses and accessed in a list of provided services by at least one letter representative of the designation of the requested service among said available services and by indicating that said at least one letter which has been entered is representative of or affected to said requested service.

Said terminal 1 comprises means to perform the method described herein before.

Nevertheless, said terminal will also allow to access a desired service by typing its prefix number as in the prior art.

Although the present invention seeks to enable access to all available services, a non limitative example is described more precisely herein after in relation to figures 2 and 3 and in connection with the "forward" service.

In a first phase, the user is presented with a first screen as shown on figure 2. He can then type the usual name or at least a few letters of the desired service and launch the search process by pressing the softkey "services" which is presented to address services directory. The user selects this softkey to find a service with the name beginning with "forward" or "renvoi".

As shown on figure 3, the application (call handling) presents on the set display 2 the first service found, which is in this case "immediate forward". The user can access to the configuration through the softkey "config" (remark: if the user rights are not compatible with this service, this softkey is not displayed). Then, the way to configure the service can be the same as today with the UA set mentioned before.

The present invention also encompasses a telecommunication system mainly comprised of a private branch exchange unit 6 and at least one, preferably several, telecommunication terminals 1 linked to said unit.

Said system is characterised in that said unit 6 runs an application providing services which are accessible and able to be activated or configured through said terminal(s) 1 and in that said system is adapted to perform the method described before (figure 1).

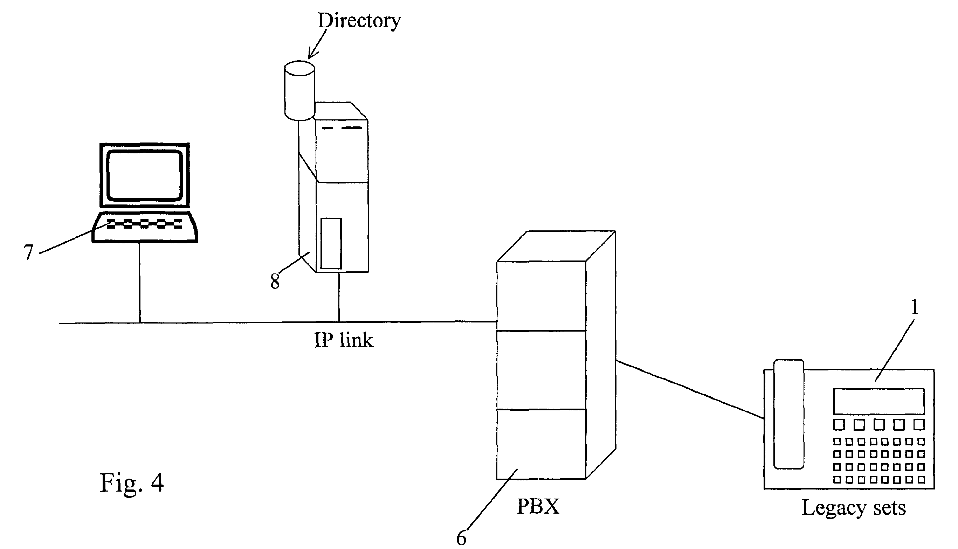

According to an alternative embodiment, shown on figure 4, the telecommunication system can also be comprised of a private branch exchange unit 6, a personal computer 7 connected to said unit and at least one, preferably several, telecommunication terminals 1 also linked to said unit.

Said system is then characterised in that said personal computer 7 runs an application providing services which are accessible and adapted to be activated or configured through said terminal(s) 1 and/or said personal computer and in that said system is adapted to perform the method according to anyone of claims 1 to 6.

In this latter case, the system can also comprise a CTI server 8 supporting the core function part of a multi-service search engine and the searchable directory, whereas the PC supports the GUI part only of said search engine and said PC and server being connected to the PBX by an IP link (see figure 4).

By accessing the application running on the PC, it is possible for the user to remotely configure a telecommunication set link to the PBX unit.

The present invention is of course not limited to the preferred embodiments described and represented herein, changes can be made or equivalents used without departing from the scope of the invention.

## Claims

1. Method for selecting, in view of its activation or configuration, a service on a telecommunication terminal comprising a display and a keyboard, wherein a first set of keys of said keyboard are softkeys whose respective functions are indicated on the display, and a second set of keys allow to type letters, **characterised in that** the available services are addressable in a list of services by entering at least one letter representative of the designation of the requested service among said available services and by indicating that said at least one letter which has been entered is representative of or affected to an available service.

2. Method according to claim 1, **characterised in that** it consists more precisely in entering at least one letter affected to or related to the requested service, displaying the name of the service or of the name of the first service of a group of several services corresponding to the at least one letter which has been entered and simultaneously affecting two softkeys (4) to scrolling functions in opposite directions in the list of available services, one softkey (4) to a cancelling function, one softkey (4) to a service configuration function and one softkey (4) or key (5) for service activation, and then cancelling the request, displaying the name of the preceding or following service in the list, entering a configuration mode or activating the displayed service in accordance with the softkey (4) pressed by the user.

3. Method according to claim 1 or 2, **characterised in that**, when said telecommunication terminal (1) comprises or has access to a phone book directory able to perform phone number searches based on names, surnames, initials or abbreviations, said terminal provides a softkey (4) allowing when pressed to indicate that the at least one entered letter is representative of a requested service, and **in that** said method consists in pressing said service indication softkey (4) after entering said at least one letter, in order to display the designation of the service or the first service corresponding to said at least one letter.

4. Method according to anyone of claims 1 to 3, **characterised in that** the at least one letter entered to select a service correspond(s) to the first letter(s) of the or one of the common designation(s) of said requested service or group of services, possibly in at least two languages.

5. Method according to claims 2 to 4, **characterised in that** a first configuration mode is set, wherein a first screen is present on the display (2) which allows to type and to show the at least one letter representative of a requested service entered with the second set of keys (5) and to instruct with allocated softkeys (4) to initiate a phone number search or to initiate a service search and then, when the service search softkey has been pressed, a second configuration mode is set, wherein a second screen is present on the display (2) which shows the name of the service or the name of the first service of a group of several services corresponding to the at least one entered letter and which allows to either display the designation of the preceding or the following name in relation with the displayed service name, cancel the service selection mode and return to the first configuration mode or enter a service configuration mode when corresponding authorisation is granted to the user, by pressing corresponding reallocated softkeys (4).

6. Method according to anyone of claims 3 to 5, **characterised in that** the phone number search process and the service search process are based on the same search mechanisms and programs.

7. Telecommunication terminal comprising a display and a keyboard, wherein a first set of keys of said keyboard are softkeys whose respective functions are indicated on the display, and a second set of keys allows to type letters, **characterised in that** said keyboard (3) and display (2) are adapted to select and possibly activate or configure a service, the available services being addresses and accessed in a list of provided services by at least one letter representative of the designation of the requested service among said available services and by indicating that said at least one letter which has been entered is representative of or affected to said requested service.

8. Telecommunication terminal according to claim 7, **characterised in that** it comprises means adapted to perform the method according to anyone of claims 2 to 6.

9. Telecommunication system mainly comprised of a private branch exchange unit and at least one, preferably several, telecommunication terminals linked to said unit, **characterised in that** said unit (6) runs an application providing services which are accessible and able to be activated or configured through said terminal(s) (1) and **in that** said system is adapted to perform the method according to anyone of claims 1 to 6.

10. Telecommunication system mainly comprised of a private branch exchange unit, a personal computer connected to said unit unad at least one, preferably several, telecommunication terminals also linked to said unit, **characterised in that** said personal computer (7) runs an application providing services which are accessible and adapted to be activated or configured through said terminal(s) (1) and/or said personal computer (7) and **in that** said system is adapted to perform the method according to anyone of claims 1 to 6.

11. Telecommunication system according to claim 9 or 10, **characterised in that** said terminals (1) correspond to a terminal according to claim 7 or 8.
